(19) Europäisches Patentamt
European Patent Office
Office européen des brevets

(11) Publication number: **0 037 735**
**B1**

(12) # EUROPEAN PATENT SPECIFICATION

(45) Date of publication of patent specification: **31.07.85**

(51) Int. Cl.[4]: **C 01 B 25/20,** C 01 B 25/12, C 01 B 25/24

(21) Application number: **81301500.5**

(22) Date of filing: **07.04.81**

(54) **Recovering heat from burning elemental phosphorus and method of preparing ultraphosphoric acid.**

(30) Priority: **09.04.80 US 138762**
**09.04.80 US 138616**

(43) Date of publication of application:
**14.10.81 Bulletin 81/41**

(45) Publication of the grant of the patent:
**31.07.85 Bulletin 85/31**

(84) Designated Contracting States:
**BE DE FR GB IT**

(56) References cited:
**DE-B-1 300 527**
**US-A-2 272 402**
**US-A-2 708 620**
**US-A-2 999 010**
**US-A-3 015 540**
**US-A-3 134 644**
**US-A-3 442 611**
**US-A-3 507 614**

(73) Proprietor: **MONSANTO COMPANY**
**Patent Department 800 North Lindbergh Boulevard**
**St. Louis, Missouri 63166 (US)**

(72) Inventor: **Hudson, Robert Blake**
**10 Barberry Lane**
**Kirkwood Missouri 63122 (US)**
Inventor: **Cadwallader, George William**
**11974 Meadow Run Court**
**Maryland Heights Missouri 63043 (US)**
Inventor: **Taylor, David Clair**
**828 Hanamoor Court**
**Glendale Missouri 63122 (US)**

(74) Representative: **Lunt, John Cooper et al**
**Monsanto Europe S.A. Patent Department**
**Avenue de Tervuren 270-272 Letter Box No 1**
**B-1150 Brussels (BE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**EP 0 037 735 B1**

**Description**

Background of the invention

This invention relates to a process for preparing ultraphosphoric and polyphosphoric acid. This invention also relates to a process for recovering valuable energy from burning of phosphorus.

Polyphosphoric acid, sometimes referred to as condensed phosphoric acid, is a mixture of polymerized acids having a general formula of

$$H_{n+2}\ (P_nO_{3n+1}).$$

It is used in the manufacture of polymerization catalysts, such as the production of propylene tetramer and for cyclizations, acylations and esterifications in organic syntheses. Polyurethane foams are also flame proofed with polyphosphoric acid. Polyphosphoric acid is produced in commercial quantities to satisfy these needs.

The prior art discloses several different ways of preparing polyphosphoric acid. One method involves mixing phosphorus pentoxide with an appropriate amount of water in a stirred, cooled chamber. A second method involves heating mixtures of phosphorus pentoxide with orthophosphoric acid. A third method involves restricting the amount of water in certain types of phosphoric acid plants to obtain the desired polyphosphoric acid. Still another method involves boiling orthophosphoric acid to evaporate water until the desired concentration is reached. The maximum concentration that can be reached by the latter method is an azeotropic mixture which varies from 91.1 to 92.2 percent $P_2O_5$ depending upon the system pressure; however, the boiling point and corrosion increase rapidly as the acid becomes more concentrated and effectively limits the concentration to well below the azeotrope.

As is known to those skilled in the art, the phosphorus pentoxide useful to make polyphosphoric acid is prepared commercially by burning elemental phosphorus in a stream of dried air, allowing adequate time for completion of the reaction to prevent the formation of lower oxides of phosphorus. The resulting phosphorus pentoxide can be made so free of lower oxides that it will not decolorize dilute permanganate solutions. The usual plant for manufacturing phosphorus pentoxide consists of a phosphorus feed system, provisions for drying the air, a burning chamber, and a process step in which the phosphorus pentoxide gas is condensed and/or contacted with water to make phosphoric acid.

The prior art on the preparation of phosphorus pentoxide from elemental phosphorus abounds with references to the disastrous corrosive attack on metals of construction at elevated temperatures unless the system was kept very dry to avoid the formation of polymeric phosphoric acid. The condensation of polymeric acids on hot metal surfaces was thought to be particularly corrosive. The polymeric acids were commonly called "meta acid", a term used loosely to describe any polymeric acid composition that is not fluid at room temperature. Such compositions are those above about 85 percent $P_2O_5$. To avoid this corrosive attack, metal surfaces were either protected by a layer of refractory or maintained below 100°C. where the corrosion rate on Type 316 stainless steel is tolerable, and this method is used in most phosphoric acid plants capable of producing polyphosphoric acid from elemental phosphorus. Neither of these methods are attractive for recovery of heat at useful steam distribution pressures.

Although satisfactory results are achieved by using the prior art processes for preparing phosphorus pentoxide and thereafter converting the phosphorus pentoxide to polyphosphoric acid, there are certain disadvantageous aspects to the prior art processes. For one thing, no practical method has been developed for recovering the enormous amount of heat that is evolved from burning elemental phosphorus in air. Indeed, some prior art processes for preparing polyphosphoric acid are very energy intensive. All of the prior art processes require careful control of the conditions in order to obtain a satisfactory product and to avoid corrosion, and in all cases it is difficult to obtain a product with a high concentration of $P_2O_5$.

A method of preparing a phosphoric acid having a concentration between 72.4% $P_2O_5$ 79.8 $P_2O_5$ by burning phosphorus with air containing a controlled amount of water is mentioned in US—A—3015540.

Now, according to the process of the present invention, ultraphosphoric acid can be prepared in the phosphorus burner while simultaneously recovering much of the heat that is generated by burning the elemental phosphorus, and such heat can be used for other processes rather than generate the heat by conventional means. The ultraphosphoric acid thus produced is a valuable intermediate in the preparation of polyphosphoric acid, and the concentration of the ultraphosphoric acid is limited only by its melting point.

The process of the present invention comprises

(a) bringing together in a reaction zone elemental phosphorus and a sufficient amount of oxygen in a free-oxygen containing gas and sufficient water to form ultra phosphoric acid in a product stream while maintaining the mole ratio of water to phosphorus pentoxide in said ultra phosphoric acid at less than 1:1;

(b) removing heat from the product stream by contacting the product stream with a metal cooling surface containing a heat transfer fluid to maintain the temperature of the metal cooling surface at at least 100°C; and

(c) recovering heat from the heat transfer fluid.

As used in the specification and claims, the term "orthophosphoric acid" shall refer to those acids containing a $H_2O$ to $P_2O_5$ mole ratio of 3:1 or greater. The term "polyphosphoric acid" shall refer to those acids containing a $H_2O$ to $P_2O_5$ mole ratio between 3:1 and 1:1. The term "ultraphosphoric acid" shall refer to those acids containing a $H_2O$ to $P_2O_5$ mole ratio of less than 1:1.

Brief description of the drawing

The sole figure is a schematic representation of an elemental phosphorus burning apparatus containing a means for removing heat from the product stream to cool the product stream below the dew point of ultraphosphoric acid and to condense at least some of the ultraphosphoric acid and which illustrates the process of the present invention.

Detailed description of the invention

Turning now to the drawing, a free-oxygen containing gas is introduced into chamber *11* through line *12*. Liquid elemental phosphorus is introduced through line *13* as a spray to react with the free-oxygen containing gas in the reaction zone contained in chamber *11*. The free-oxygen containing gas contains sufficient water to form ultraphosphoric acid, the mole ratio of water to phosphorus pentoxide being less than 1:1. The products of the reaction zone then pass through a crossunder conduit *14* which contains a cooling surface *15*. A heat exchange fluid enters cooling surface *15* through pipe *16* and circulates through cooling surface *15* and exits through exit pipe *17*, where the heat in the heat exchange fluid can be recovered. At least some of the ultraphosphoric acid condenses on cooling surface *15* and drains from cooling surface *15* and is removed from the system through product line *18*.

The remainder of the products of the reaction zone then pass through crossunder conduit *14* and are contacted with weak phosphoric acid or water in absorber *22* which enters the absorber through scrub line *23*. In absorber *22*, the remainder of the ultraphosphoric acid and phosphorus pentoxide is converted to orthophosphoric acid. The remainder of the free-oxygen containing gas exits the system through exit conduit *24*. Orthophosphoric acid is removed from the system through drain conduit *25* and can be used as a product or combined with the ultraphosphoric acid from product line *18* to form polyphosphoric acid.

The free-oxygen containing gas useful in the process of the present invention can be derived from any number of sources. For example, oxygen can be admixed with a noble gas such as neon, argon, krypton, xenon and the like. On the other hand, air or oxygen enriched air can be used with satisfactory results, and air is preferred. Since the reaction with elemental phosphorus is so exothermic, the use of pure oxygen should be avoided as well as free-oxygen containing gases containing greater than about 50 volume percent oxygen.

The amount of oxygen should be at least enough to react with the elemental phosphorus to form phosphorus pentoxide and it is preferred to use an excess amount of oxygen to avoid the formation of the lower oxides of phosphorus. For example, if air is used about 30 percent excess air over the stoichiometric amount required to form phosphorus pentoxide should be introduced into the reaction chamber to avoid the formation of lower oxides of phosphorus. On the other hand, it is preferred to use less than about 200 mole percent excess air over the stoichiometric amount required to form phosphorus pentoxide to avoid handling excessive gas volumes and the reduction in the dew point of ultraphosphoric acid, but larger quantities of free-oxygen containing gas do not prevent operation of the present process.

The water required to form ultraphosphoric acid can be introduced into the reaction zone separately or it can be introduced with the air, and this is what I prefer to do. The appropriate amount of water in the air can be controlled by adding water vapor to the air or by drying the air as appropriate to provide sufficient water to form ultraphosphoric acid, while maintaining the mole ratio of water to phosphorus pentoxide at less than 1:1.

The amount of water in the process can readily be controlled by controlling the dew point of the oxygen-containing gas entering the reaction zone. At high relative humidities, the amount of water can be controlled by drying the oxygen-containing gas using conventional techniques. On the other hand, at low relative humidities, water vapor (steam) can be added to the free-oxygen containing gas to provide the desired amount of water relative to the phosphorus pentoxide. Alternatively the ratio of water to phosphorus pentoxide can be controlled by varying the amount of excess oxygen-containing gas entering the reaction zone so that the moles of water entering the reaction zone relative to phosphorus pentoxide is maintained below 1:1. A combination of these techniques can also be used. As an exmple, the following tabulation shows mole percent phosphorus pentroxide in the mixture of phosphorus pentoxide and water as a function of the dew point of air entering the reaction zone at a flow rate of 200 percent excess combustion air over that required to form $P_2O_5$.

TABLE 1

$H_2O/P_2O_5$ Mole ratio as a function of combustion air dew point

| $H_2O/P_2O_5$ Mole ratio | Dew Point °C. | °F. |
|---|---|---|
| 1.3 | 26.7 | 80 |
| 0.9 | 21.1 | 70 |
| 0.4 | 10 | 50 |
| 0.3 | 4.4 | 40 |
| 0.2 | −1.1 | 30 |

As noted above, the amount of water in the reaction zone to form the ultraphosphoric acid is

critical in the process of the present invention. When the mole ratio of water to phosphorus pentoxide exceeds 1:1, linear polyphosphoric acids are produced which are corrosive to the materials of construction at the temperatures normally used in the present process. On the other hand, when less than 1 mole of water to 5 moles of phosphorus pentoxide is present, the ultraphosphoric acid that is produced contains crystalline phosphorus pentoxide and is so viscous that it is virtually a solid up to its sublimation temperature of about 580°C. Hence, it can be seen that the mole ratio of water to phosphorus pentoxide should be between 1:5 and 1:1, and it is preferred that the mole ratio of water to phosphorus pentoxide should be between 1:2 and 9:10.

In the process of the present disclosure, the viscosity of the ultraphosphoric acid is dependent upon the concentration and the temperature of the ultraphosphoric acid. This is exemplified by the data in Table 2 which were obtained using a Brookfield Rotoviscometer at temperatures between 200°C. and 500°C. at different concentrations of $P_2O_5$ in the ultraphosphoric acid.

TABLE 2
Viscosity of $H_2O/P_2O_5$ mixtures

| $H_2O/P_2O_5$ Mole ratio | Temp., °C. | η, Centipoise |
|---|---|---|
| 1:1 | 418 | $1.36\times10^4$ |
| 1:1 | 357 | $3.66\times10^4$ |
| 1:1 | 272 | $1.86\times10^5$ |
| 1:1 | 198 | $1.27\times10^6$ |
| 0.9:1 | 487 | $1.23\times10^4$ |
| 0.9:1 | 390 | $5.29\times10^4$ |
| 0.9:1 | 262 | $5.40\times10^5$ |
| 0.8:1 | 447 | $3.43\times10^4$ |
| 0.8:1 | 345 | $1.67\times10^5$ |
| 0.8:1 | 236 | $1.70\times10^6$ |
| 0.7:1 | 452 | $9.56\times10^4$ |
| 0.7:1 | 345 | $6.27\times10^5$ |
| 0.7:1 | 252 | $6.31\times10^6$ |
| 0.6:1 | 505 | $6.75\times10^4$ |
| 0.6:1 | 430 | $1.96\times10^5$ |
| 0.6:1 | 382 | $4.74\times10^5$ |
| 0.6:1 | 265 | $7.20\times10^6$ |

From the data in Table 1 and in Table 2, it can be seen that the flow characteristics of the ultraphosphoric acid made according to the process of the present invention are dependent upon the water content as well as upon the temperature at which the ultraphosphoric acid is maintained in the system. Generally, the higher the temperature and the higher the water content of the ultraphosphoric acid, the more readily it flows. Optimum conditions for preparing the ultraphosphoric acid of predetermined composition and viscosity can readily be determined by those skilled in the art through routine experimentation.

Referring again to the drawing, cooling surface *15* can be any number of shapes, sizes and configurations in order to remove heat from the product stream from the reaction zone to condense at least some of the ultraphosphoric acid. In addition, the cooling surface can be constructed of rather ordinary materials of construction, such as stainless steel, and this is what I prefer to use. The optimum size and configuration can be determined by those skilled in the art for their particular system although I have found it convenient to use banks of coils of stainless steel tubing placed perpendicular to the flow of the product stream from the reaction zone through crossunder conduit 14.

The temperature of the cooling surface *15* will depend upon a number of factors as will occur to those skilled in the art. For example, the particular cooling fluid employed, the configuration of the cooling surface, its relationship in the crossunder conduit *14*, the temperature of the product stream and other factors are all interrelated. It is preferred to maintain the temperature of the cooling surface between 150°C. and 800°C., preferably between 200°C. and 300°C.

Any number of fluids can be circulated through the cooling surface *15* by introduction into pipe *16* and discharged from the cooling surface through exit pipe *17*. Suitable fluids include gases, such as air, nitrogen, helium, neon, argon, krypton and xenon and the like; water, such as pressurized water, steam, and the like; molten salt mixtures, such as a ternary mixture of approximately 16 percent by weight of lithium nitrate, 42 percent by weight of potassium nitrate and 42 percent by weight of sodium nitrate and the like; aromatic and aliphatic organic compounds such as aniline, pyridine, thiophene and substituted derivatives thereof and the aliphatic nitro compounds such as nitromethane and aliphatic nitriles and the like. I prefer to use water at a temperature of about 200°C. and at a pressure of about 35 atmospheres.

When the process is operated to recover ultraphosphoric acid, the heat removed from the product stream in contact with the cooling surface is sufficient to condense from said stream ultraphosphoric acid on the cooling surface, and the condensed ultraphosphoric acid is collected. This condensation is no problem in the process of the present invention since the condensed ultraphosphoric acid will form a film on the cooling surface which tends to relieve heat stress in the metal created by the heat transfer fluid on one side and the hot product stream on the other. As long as the water to phosphorus pentoxide mole ratio is less than 1:1, the corrosion of the cooling surface is minimal. I prefer to cool the product stream in contact with the cooling surface to a temperature at least 100°C. below the dew point of the ultraphosphoric acid in the product stream for efficient recovery of heat and ultraphosphoric acid. As will occur to those skilled in the art, the

temperature of the cooled product stream will depend upon a number of factors, such as the temperature of the product stream leaving the reaction zone, the temperature of the cooling surface, the area of the cooling surface, and the like, and the temperature of the cooled product stream can readily be controlled through routine experimentation for any particular facility.

The ultraphosphoric acid made by the process of the present invention is a glass at room temperature, but flows at the temperatures used in the present process. Ultraphosphoric acid can be used as an intermediate in a number of chemical reactions, or it can be converted to polyphosphoric acid, an item of commerce, by the addition of water. Upon further addition of water, the polyphosphoric acid can be converted to orthophosphoric acid.

In order to convert ultraphosphoric acid to polyphosphoric acid, it is only necessary to combine the ultraphosphoric acid with the appropriate amount of water or orthophosphoric acid in an agitated container using conventional equipment and techniques. Since polyphosphoric acid is corrosive at elevated temperatures, the temperature is maintained below about 150°C. to prepare 115 percent phosphoric acid, and below 120°C. to prepare 105 percent phosphoric acid. The appropriate temperatures to make other polyphosphoric acids can be determined by routine experimentation.

In another aspect of the invention, the process can be operated so as to recover the valuable process heat from the burning of phosphorus without separating any of the polymeric phosphonic acids. This aspect is particularly advantageous when only orthophosphonic acid is desired as product, and is illustrated by Example III below.

In conducting the process in such manner the heat removed from the product stream is not sufficient to cool the product stream by contact with the cooling surface to a temperature less than the dew point of any component in the product stream, preferably not less than 100°C. above such dew point. In such cases the temperature of the cooling surface can be maintained between 150°C. and 900°C., preferably between 200°C. and 300°C.

When the product stream from the reaction zone contacts the cooling surface, the product stream is cooled to a temperature not less than the dew point of any component in the product stream. The most likely components in the product stream to condense as the product stream is cooled are phosphorus pentoxide and ultraphosphoric acids (i.e., acids containing a mole ratio of $H_2O$ to $P_2O_5$ of less than 1:1). Hence, it is preferred to cool the product stream to a temperature not less than 100°C. above the dew point of any component in the product stream. As will occur to those skilled in the art, the temperature of the cooled product stream will depend upon a number of factors, such as the temperature of the product stream leaving the reaction zone, the temperature of the cooling surface, the efficiency of the cooling surface, and the like, and the temperature of the cooled product stream can readily be controlled through routine experimentation for any particular facility.

Even though the temperature of the cooled product stream in contact with the cooling surface is above the dew point of any component in the product stream, some of the components, such as ultraphosphoric acid and/or phosphorus pentoxide, can condense on the cooling surface. This is no problem in the process of the present invention since excess condensate will be removed by the product stream having a temperature above the dew point of the condensate. Indeed, a film of condensate on the cooling surface tends to relieve heat stress in the metal created by the heat transfer fluid on one side and the hot product stream on the other. As long as the water to phosphorus pentoxide mole ratio is less than 1:1, the corrosion on the cooling surface is minimal.

The valuable heat contained in the heat transfer fluid can be recovered and economically used by conventional techniques known to those skilled in the art. For example, the heat transfer fluid from exit pipe *17* can be used to heat water to make steam for other chemcial processes, to generate electricity, and the like. On the other hand, if pressurized water is used as the heat transfer fluid, it can be used directly to make high pressure steam for the above purposes, although it may be desirable to maintain this water in a closed system. After the heat from the heat transfer fluid in a closed system has been removed for other uses, the heat transfer fluid can be introduced again into cooling surface *15* through pipe *16*. Other modifications and uses will occur to those skilled in the art in view of the present disclosure.

The invention is further illustrated by but not limited to the following Examples wherein all proportions are by weight unless otherwise indicated.

Example I

An elemental phosphorus burner is modified by placing a U-tube in the crossunder conduit perpendicular to the flow of gases from the burning chamber. Pressurized water at a pressure of 35 atmospheres is circulated through the U-tube. Then, about 7,700 kilograms per hour of pressurized air is introduced into the burning chamber, and then about 454 kilograms per hour of molten elemental phosphorus is sprayed into the air from above. The dew point of the air is about 21°C. The temperature of the water circulating through the U-tube increases to about 200°C. and sufficient water flow is maintained in the U-tube to maintain this temperature. Ultraphosphoric acid condenses on the U-tube and drains to the bottom of the tube, and is withdrawn through a pipe attached to the crossunder conduit as illustrated in Figure 1. About 13 kilograms of ultraphosphoric acid is recovered which contains a mole ratio of $H_2O$ to $P_2O_5$ of about 0.9:1.

Calculations indicate that about 230 MJ per hour per squre meter of cooling surface are recovered as steam for other uses.

Example II

The general procedure of Example I is repeated except that a series of U-tubes is used to provide about 10 square meters of cooling surface, and 3,400 kilograms of air having a dew point of about 21°C. is used. About 540 kilograms of ultraphosphoric acid is recovered.

Example III

An elemental phosphorus burner is modifed by placing a 316 stainless steel U-tube in the crossover conduit perpendicular to the flow of gases from the burning chamber. Pressurized water at a pressure of 35 atmospheres is circulated through the U-tube. Then, about 7,700 kilograms per hour of air are introduced into the burning chamber, and then about 454 kilograms per hour of molten elemental phosphorus are sprayed into the air from above. The dew point of the air is about 13°C. The temperature of the water circulating through the U-tube increases to about 200°C. and sufficient water flow is maintained in the U-tube to maintain this temperature. About 260 MJ per hour per square meter of cooling surface are recovered as steam for other uses.

As an example, the invention has been illustrated with respect to one design' of a facility to convert elemental phosphorus to phosphorus pentoxide wherein the product stream from the reactor chamber passes through a crossunder conduit. As is known to those skilled in the art, some facilities use crossover conduits rather than crossunder conduits, and some facilities have yet other configurations. In some facilities, the walls can be cooled with fluids, such as air or water, to recover additional usable heat. In addition, the cooling surface can be moved closer to the burning chamber or toward the absorber, or even placed in the burning tower. All such modifications are deemed to be equivalent for purposes of this invention.

## Claims

1. A process which comprises:

(a) bringing together in a reaction zone elemental phosphorus and a sufficient amount of oxygen in a free-oxygen containing gas and sufficient water to form ultra phosphoric acid in a product stream while maintaining the mole ratio of water to phosphorus pentoxide in said ultra phosphoric acid to less than 1:1;
(b) removing heat from the product stream from the reaction zone by contacting the product stream with a metal cooling surface containing a heat transfer fluid to maintain the temperature of the metal cooling surface at at least 100°C.; and
(c) recovering heat from the heat transfer fluid.

2. A process of Claim 1 wherein the heat removed from the product stream is not sufficient to cool the product stream contacted by the cooling surface to a temperature less than the dew point of any component in the product stream.

3. A process of Claim 1 wherein the cooling surface is maintained between 150°C. and 900°C.

4. A process of Claim 1 wherein the heat transfer fluid is selected from the group consisting of noble gases, free-nitrogen containing gases, eutectic salt mixtures, water and steam.

5. A process of Claim 1 wherein the heat transfer fluid is pressurized water.

6. A process of Claim 5 wherein the metal cooling surface is a stainless steel coil.

7. A process of Claim 1 wherein the heat removed from the product stream in contact with the cooling surface is sufficient to condense from said stream ultraphosphoric acid on the cooling surface, and the condensed ultraphosphoric acid is collected.

8. A process of Claim 7 wherein the mole ratio of water to phosphorus pentoxide is at least 1:5.

9. A process of Claim 7 wherein the free-oxygen containing gas is air and at least 30 percent over the amount required to form phosphorus pentoxide is introduced into the reaction zone.

10. A process of Claim 9 wherein the temperature of the cooling surface is maintained between 150°C. and 300°C.

11. A process of Claim 10 wherein the heat is removed from the product stream by contact with the cooling surface by circulating pressurized water through the cooling surface.

12. A process of Claim 11 wherein the collected ultraphosphoric acid is combined with sufficient water to provide polyphosphoric acid.

## Patentansprüche

1. Verfahren, in dem

(a) in einer Reaktionszone elementarer Phosphor und eine hinreichende Menge Sauerstoff in einem freien Sauerstoff enthaltenden Gas und hinreichend Wasser zusammengebracht werden, um Ultraphosphorsäure in einem Produktstrom zur Verfügung zu stellen, während das Molverhältnis von Wasser zu Phosphorpentoxid in der Ultraphosphorsäure bei weniger als 1:1 gehalten wird,
(b) Wärme aus dem Produktstrom aus der Reaktionszone abgezogen wird, indem der Produktstrom mit einer Metallkühlfläche, die eine Wärmeübertragungsflüssigkeit enthält, um die Temperatur der Metallkühlfläche bei mindestens 100°C zu halten, in Berührung gebracht wird und
(c) die Wärme aus der Wärmeübertragungsflüssigkeit gewonnen wird.

2. Verfahren nach Anspruch 1, worin die aus dem Produktstrom abgezogene Wärme nicht hinreichend ist, um den Produktstrom, der mit der Kühlfläche in Berührung gebracht wurde, auf eine Temperatur unterhalb des Taupunktes einer Verbindung im Produktstrom zu kühlen.

3. Verfahren nach Anspruch 1, worin die Kühlfläche zwischen 150°C und 900°C gehalten wird.

4. Verfahren nach Anspruch 1, worin die Wärmeübertragungsflüssigkeit ausgewählt ist aus der Gruppe von Edelgasen, freien Stickstoff enthaltenden Gasen, eutektischen Salzgemischen, Wasser und Dampf.

5. Verfahren nach Anspruch 1, worin die Wärmeübertragungsflüssigkeit mit Druck beaufschlagtes Wasser ist.

6. Verfahren nach Anspruch 5, worin die Metallkühlfläche eine Rohrschlange aus korrosionsfestem Stahl ist.

7. Verfahren nach Anspruch 1, worin die Wärme, die von dem Produktstrom, der in Berührung mit der Kühlfläche steht, abgezogen wird, hinreichend ist, um von dem Strom Ultraphosphorsäure auf der Kühlfläche zu kondensieren, und die kondensierte Ultraphosphorsäure gesammelt wird.

8. Verfahren nach Anspruch 7, worin das Molverhältnis von Wasser zu Phosphorpentoxid mindestens 1:5 beträgt.

9. Verfahren nach Anspruch 7, worin das freien Sauerstoff enthaltende Gas Luft ist und mindestens 30 Prozent mehr als die zur Bildung von Phosphorpentoxid benötigte Menge in die Reaktionszone eingeführt werden.

10. Verfahren nach Anspruch 9, worin die Temperatur der Kühlfläche zwischen 150°C und 300°C gehalten wird.

11. Verfahren nach Anspruch 10, worin die Wärme aus dem Produktstrom durch Berührung mit der Kühlflache durch umlaufendes druckbeaufschlagtes Wasser durch die Kühlfläche abgezogen wird.

12. Verfahren nach Anspruch 11, worin die gesammelte Ultraphosphorsäure mit hinreichend Wasser zusammengegeben wird, um Polyphosphorsäure zur Verfügung zu stellen.

**Revendications**

1. Procédé qui consiste:

(a) à envoyer ensemble dans une zone réactionnelle du phosphore élémentaire et une quantité suffisante d'oxygène dans un gaz contenant de l'oxygène libre et une quantité suffisante d'eau pour former de l'acide ultraphosphorique dans un courant de produit tout en maintenant le rapport molaire de l'eau au pentoxyde de phosphore dans cet acide ultraphosphorique à moins de 1:1;

(b) à éliminer de la chaleur du courant de produit provenant de la zone réactionnelle en mettant en contact le courant de produit avec une surface de refroidissement métallique contenant un fluide de transfert de chaleur pour maintenir la température de la surface de refroidissement métallique à au moins 100°C; et

(c) à récupérer de la chaleur du fluide de transfert de chaleur.

2. Procédé selon la revendication 1, dans lequel la chaleur éliminée de courant de produit n'est pas suffisante pour refroidir le courant de produit mis en contact avec le surface de refroidissement à une température inférieure au point de rosée de n'importe quel constituant du courant de produit.

3. Procédé selon la revendication 1, dans lequel la surface de refroidissement est maintenue entre 150°C et 900°C.

4. Procédé selon la revendication 1, dans lequel le fluide de transfert de chaleur est choisi dans le groupe constitué des gaz nobles, des gaz contenant de l'azote libre, des mélanges eutectiques de sels, de l'eau et de la vapeur.

5. Procédé selon la revendication 1, dans lequel le fluide de transfert de chaleur est de l'eau sous pression.

6. Procédé selon la revendication 5, dans lequel la surface de refroidissement métallique est un serpentin d'acier inoxydable.

7. Procédé selon la revendication 1, dans lequel la chaleur éliminée du courant de produit en contact avec la surface de refroidissement est suffisante pour condenser dans ce courant l'acide ultraphosphorique sur la surface de refroidissement, et dans lequel l'acide ultraphosphorique condensé est recueilli.

8. Procédé selon la revendication 7, dans lequel le rapport molaire de l'eau au pentoxyde de phosphore est d'au moins 1:5.

9. Procédé selon la revendication 7, dans lequel le gaz contenant de l'oxygène libre est l'air et dans lequel au moins 30 % du plus que la quantité nécessaire pour former du pentoxyde de phosphore sont introduits dans la zone de réaction.

10. Procédé selon la revendication 9, dans lequel la température dans la surface de refroidissement est maintenue entre 150 et 300°C.

11. Procédé selon la revendication 10, dans lequel la chaleur est éliminée du courant de produit par contact avec la surface de refroidissement en faisant circuler de l'eau sous pression à travers la surface de refroidissement.

12. Procédé selon la revendication 11, dans lequel l'acide ultraphosphorique recueilli est combiné avec suffisamment d'eau pour fournir l'acide polyphosphorique.

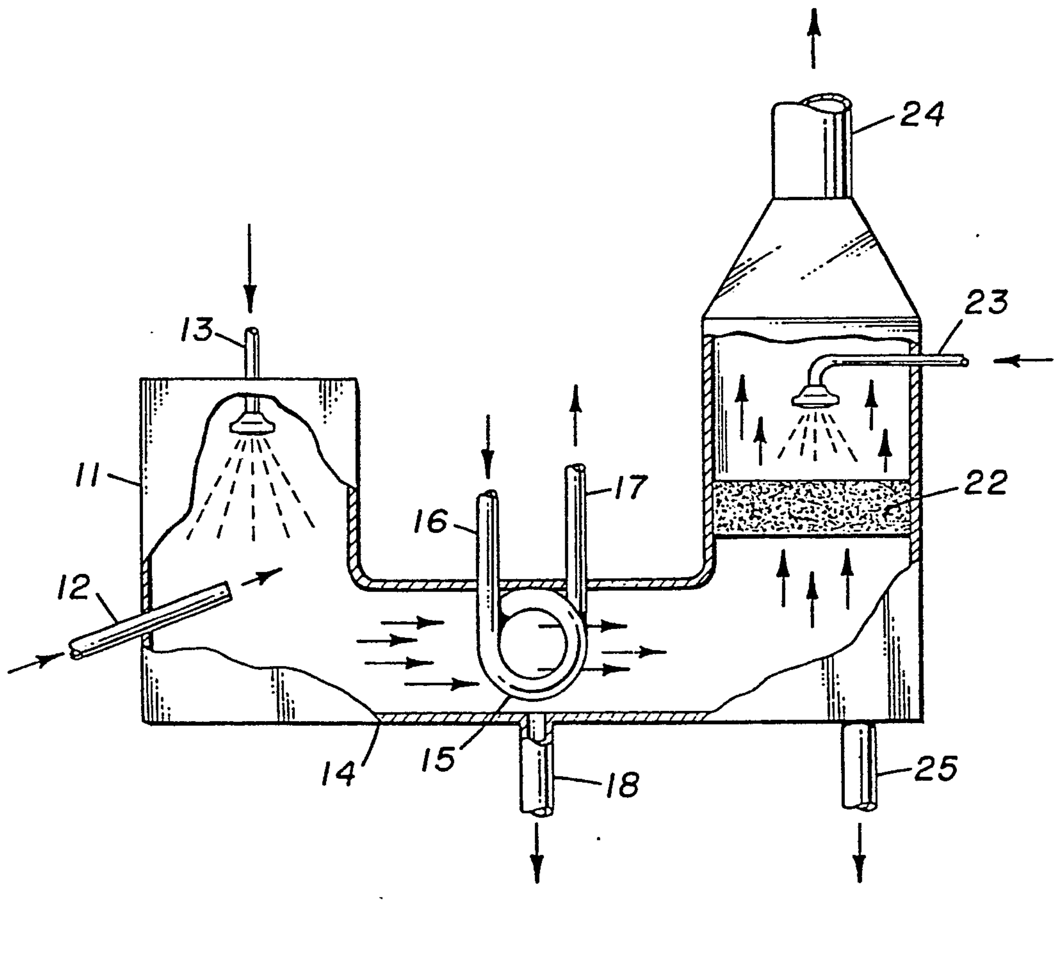
24
23
13
11
16
17
22
12
14
15
18
25